# EUROPEAN PATENT SPECIFICATION

(11) **EP 0 992 021 B1**
(45) Date of publication and mention of the grant of the patent: **06.08.2003**
(21) Application number: 98917777.9
(22) Date of filing: 04.05.1998
(51) Int. Cl.: G06T 1/00

(54) **METHOD OF DETECTING SPATIAL GRADIENT BY UTILIZING COLOR INFORMATION**
VERFAHREN ZUM ERMITTELN EINES RÄUMLICHEN GRADIENTEN MIT INFORMATIONEN ÜBER DIE FARBE
PROCEDE DE MESURE D'UN GRADIENT SPATIAL A L'AIDE D'INFORMATIONS COULEUR

(30) Priority: 18.06.1997 KR 9725560
(43) Date of publication of application: 12.04.2000
(73) Proprietor: Electronics and Telecommunications Research Institute, Daejeon-shi 305-350 (KR)
(72) Inventor: CHOI, Jae, Gark, Daejon-shi 305-333 (KR); KIM, Mun, Churl, Daejon-shi 302-223 (KR); LEE, Myoung, Ho, Daejeon-shi (KR)
(74) Representative: Betten & Resch
(86) International application number: KR9800111
(87) International publication number: WO98058349

(56) References cited:
- FR-A- 2 736 742
- US-A- 5 577 131

## Description

### Field of the Invention

The present invention relates to a method of detecting spatial gradients which are used in watershed algorithms which partitions an image into semantic regions with precise boundaries by utilizing color information.

### Information Disclosure Statement

Conventional methods of detecting spatial gradient eg as described in FR-A-2 736 742 have detected spatial gradients by using a morphological gradient operator for brightness information.

Since the conventional methods only use the brightness information, it is difficult to obtain the precise spatial gradients in between regions having similar brightness although the two regions are different.

Therefore, in case of applying the conventional methods of detecting spatial gradients to the watershed algorithms, there is a problem that the region segmentation or boundary detection for objects in an image can not be satisfactorily performed.

### SUMMARY OF THE INVENTION

The present invention invented to solve the problems described above has an object that it provides a method of detecting spatial gradient which detects visually meaningful spatial gradient by using color information to perform the precise region segmentation and boundary extraction by using the spatial gradient to the watershed algorithm.

The present invention to accomplish the object described above provides a method of detecting spatial gradient which is applied to an image region segmentation and boundary extraction system, the method being characterized in that it comprises a first step of simplifying each color information of an image signal; a second step of detecting said spatial gradient information for each simplified color information; a third step of multiplying an appropriate weighting value to each color gradient information; and a fourth step of obtaining a combined spatial gradient for each weighted color gradient information.

### BRIEF DESCRIPTION OF THE DRAWINGS

For fuller understanding of the nature and object of the invention, reference should be had to the following detailed description taken in conjunction with the accompanying drawings in which:
Fig. 1 is a constructional block diagram of the image region segmentation and boundary extraction system to which the present invention is applied; and
Fig. 2 is a flowchart of the method of detecting spatial gradient acording to the present invention.

Similar reference characters refer to similar parts in the several views of the drawings.

### DETAILED DESCRIPTION OF THE INVENTION

Below is given a detailed description of an embodiment according to the present invention with reference to the accompanying drawings.

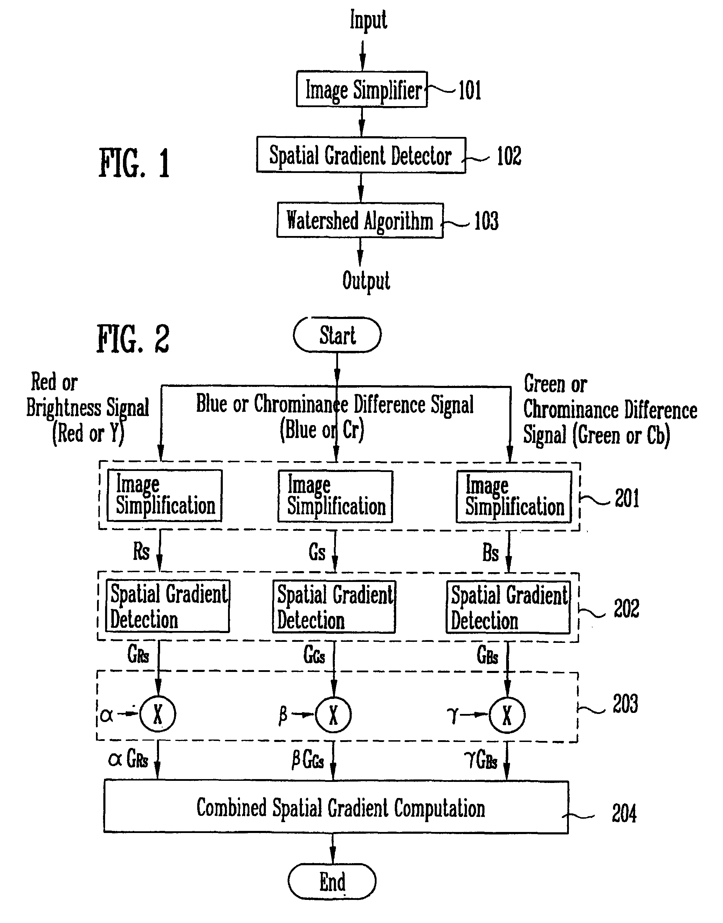

Fig. 1 shows a constructional block diagram of an image region segmentation and boundary extraction system to which the present invention is applied, wherein reference numeral **101** denotes an image simplifier, **102** denotes a spatial gradient detector, and **103** denotes a watershed algorithm.

First, the image simplifier **101** simplifies an input signal image to be adapted to the region segmentation and boundary information extraction. That is, the image simplifier **101** removes unwanted details from the image by using an appropriate filter, i.e. it removes small changes which are of no help to detect meaningful boundary extraction.

The spatial gradient detector **102** detects a spatial gradient representing a boundary information of a region from the simplified image received from the image simplifier **101**.

At this time, the information of spatial gradient is obtained by using a morphological gradient operator.

Next, the spatial gradients obtained by the Spatial Gradient Detector **102** are used as input to the watershed algorithm **103** for region detection.

Fig. 2 is a flowchart of a method of detecting a spatial gradient according to the present invention.

Informations of image signal are composed of arbitrary color elements including red, green and blue.

In the present invention, the spatial gradient information is detected by using not only the brightness information but also all the three elements of color image signal to perform the visually meaningful image segmentation and boundary information by applying the spatial gradient information to the watershed algorithm.

First, the image is simplified at step **201** so that the image segmentation is easy by using an appropriate filter to each of the three elements (red or brightness signal, blue or the first chrominance difference signal, and green or the second chrominance difference signal) of the color image signal. That is, Rs, Gs and Bs are obtained by simplifying the interior of region while reserving the boundary of region. Here, the three elements of color image signal used as input signal may be any color coordinate system including red, green and blue. At this time, in simplifying the image, the first chrominance difference signal is the brightness minus red and the second chrominance difference signal is the brightness minus blue.

Thereafter, the spatial gradients for the simplified three color information are obtained at step **202**. That is, each of the spatial gradient information G_{Rs}, G_{Gs} and G_{Bs} is obtained by applying the morphological gradient operator.

Next, appropriate weighting values are multiplied to the three color gradient informations obtained by using the morghological gradient operator depending upon the importance of the three color gradient informations at step **203**. That is, each of α G_{Rs}, β G_{Gs} and γG_{Bs} is obtained.

In this way, the maximum values of three color gradients informations multiplied by the arbitrary weighting values are obtained for each pixel at step **204**. That is, the combined spatial gradients are obtained by obtaining the maximum values of α G_{Rs}, β G_{Gs} and γG_{Bs} . The maximum gradients thus obtained are defined as the spatial gradients of that pixel.

If the watershed algorithm is applied to the spatial gradients, the precise region segmentation and boundary extraction are possible.

The present invention described above has effects that the detection of the visually meaningful spatial gradients is possible by obtaining the spatial gradients by using the color information, and the precise image region segmentation and boundary information extraction is possible by applying the watershed algorithm to the spatial gradients.

The foregoing description, although described in its preferred embodiment with a certain degree of particulaity, is only illustrative of the principles of the present invention. It is to be understood that the present invention is not to be limited to the preferred embodiments disclosed and illustrated herein. Accordingly, all expedient variations that may be made within the scope of the present invention as defined in the appended claims are to be encompassed as further embodiments of the present invention.

## Claims

1. A method of detecting spatial gradient which is applied to an image region segmentation and boundary extraction system comprising the steps of:
a first step (101,201) of simplifying each color information of an image signal;
a second step (102,202) of detecting said spatial gradient information for each simplified color information;
a third step (203) of multiplying an appropriate weighting value to each color gradient information; and
a fourth step (204) of obtaining a combined spatial gradient for each weighted color gradient information.

2. The method as claimed in claim 1, wherein said third step (203) of multiplying an appropriate weighting value multiplies said appropriate weighting value depending upon the importance of each color gradient information.

3. The method as claimed in claim 1 or 2, wherein said fourth step (204) of obtaining a combined spatial gradient obtains said combined spatial gradient by obtaining maximum value of each color gradient information.

4. The method as claimed in claim 3, wherein said each color image signal comprises color components in any color coordination systems including red, green and blue.

## Patentansprüche

1. Verfahren zur Erfassung eines räumlichen Gradienten, der auf ein Bildbereichssegmentations- und Grenzextraktionssystem angewendet wird, aufweisend die Schritte:
einen ersten Schritt (101, 201) zur Vereinfachung der Farbinformation eines Bildsignals;
einen zweiten Schritt (102, 202) der Erfassung der räumlichen Gradienteninformation für jede vereinfachte Farbinformation;
einen dritten Schritt (203) der Multiplikation eines geeigneten Gewichtungswertes mit jeder Farbgradienteninformation; und
einen vierten Schritt (204) der Bestimmung eines kombinierten räumlichen Gradienten für die gewichtete Farbgradienteninformation.

2. Verfahren nach Anspruch 1, wobei der dritte Schritt (203) der Multiplikation eines geeigneten Gewichtungswertes den geeigneten Gewichtungswert in Abhängigkeit von der Bedeutung der jeweiligen Farbgradienteninformation multipliziert.

3. Verfahren nach Anspruch 1 oder 2, wobei der vierte Schritt (204) der Bestimmung eines kombinierten räumlichen Gradienten den kombinierten räumlichen Gradienten durch Bestimmung des Maximalwertes jeder Farbgradienteninformation enthält.

4. Verfahren nach Anspruch 3, wobei jedes Farbbildsignal Farbkomponenten in irgendeinem Farbkoordinatensystem einschließlich Rot, Grün und Blau aufweist.

## Revendications

1. Procédé de détection d'un gradient spatial qui est appliqué à un système d'extraction de frontière et de segmentation de zone d'image, comprenant les étapes suivantes :
une première étape (101, 201) de simplification de chaque information de couleur d'un signal d'image ;
une deuxième étape (102, 202) de détection desdites informations de gradient spatial pour chaque information de couleur simplifiée ;
une troisième étape (203) de multiplication d'une valeur de pondération appropriée avec chaque information de gradient de couleur ; et
une quatrième étape (204) d'obtention d'un gradient spatial combiné pour chaque information de gradient de couleur pondérée.

2. Procédé selon la revendication 1, dans lequel ladite troisième étape (203) de multiplication d'une valeur de pondération appropriée multiplie ladite valeur de pondération appropriée en fonction de l'importance de chaque information de gradient de couleur.

3. Procédé selon la revendication 1 ou 2, dans lequel ladite quatrième étape (204) d'obtention d'un gradient spatial combiné obtient ledit gradient spatial combiné en obtenant la valeur maximale de chaque information de gradient de couleur.

4. Procédé selon la revendication 3, dans lequel chaque dit signal d'image de couleur comprend des composantes de couleur dans n'importe quels systèmes de coordonnées de couleurs comprenant le rouge, vert et bleu.
